# EUROPÄISCHE PATENTSCHRIFT

(11) **EP 0 594 232 B1**
(45) Veröffentlichungstag und Bekanntmachung des Hinweises auf die Patenterteilung: **14.08.1996**
(21) Anmeldenummer: 93202612.3
(22) Anmeldetag: 07.09.1993
(51) Int. Cl.: B01D 53/56, B01J 27/053

(54) **Verfahren zur katalytischen Reduktion von Stickstoffoxiden in Verbrennungsabgasen**
Process for catalytic reduction of nitrogen oxides in combustion exhaust gases
Procédé pour la réduction catalytique d'oxydes d'azote dans les gaz de combustion

(30) Priorität: 21.10.1992 DE 4235411
(43) Veröffentlichungstag der Anmeldung: 27.04.1994
(73) Patentinhaber: METALLGESELLSCHAFT AG, D-60323 Frankfurt am Main (DE)
(72) Erfinder: Thöne, Bernd, D-61169 Friedberg (DE); Schmidt, Gerhard, D-61184 Karben (DE); Herrmann, Erhard, Dr., D-51373 Leverkusen (DE)

(56) Entgegenhaltungen:
- EP-A- 0 249 426
- EP-A- 0 490 414
- EP-A- 0 525 847
- DE-A- 2 504 027

## Beschreibung

Die Erfindung betrifft ein Verfahren zum Entstauben und Entsticken eines Verbrennungsabgases, wobei man das Abgas mit NH₃ mischt, mit Temperaturen im Bereich von etwa 250 bis 600°C als Wirbelgas durch eine Wirbelschicht leitet, die einen FeSO₄ enthaltenden Entstickungskatalysator aufweist, und Feststoffe in einem Elektrofilter abscheidet.

Ein Verfahren dieser Art ist in der DE-A-37 01 527 beschrieben. Hierbei arbeitet man mit einem Entstickungskatalysator, der u.a. FeSO₄ auf einem Träger, z.B. SiO₂, enthält. Der Erfindung liegt die Aufgabe zugrunde, das bekannte Verfahren weiterzuentwickeln und dabei im Elektrofilter eine verbesserte Feststoffabscheidung zu erreichen.

Die Aufgabe wird erfindungsgemäß dadurch gelöst, daß man beim eingangs genannten Verfahren der Wirbelschicht frischen Entstickungskatalysator zuführt, der zu mindestens 90 Gew.% aus kristallwasserhaltigem FeSO₄ mit Korngrößen im Bereich von 1 bis 150 µ (1µ = 10⁻⁶m) besteht, wobei mindestens 60 Gew.% des frischen Entstickungskatalysators Korngrößen im Bereich von 1 bis 60 µ und mindestens 10 Gew.% Korngrößen von höchstens 40 µ aufweisen. Dieser kristallwasserhaltige FeSO₄-Katalysator ist sehr feinkörnig und wird dadurch nicht bereits im Eingangsbereich des Elektrofilters abgeschieden. Der feinkörnige Katalysator durchzieht vielmehr das ganze Elektrofilter und verbessert dort die Abscheidung der anderen Feststoffbestandteile im Abgas, wobei er gleichzeitig in ausreichendem Maße mit abgeschieden wird.

Das als Entstickungskatalysator zu verwendende kristallwasserhaltige FeSO₄, insbesondere FeSO₄· 1H₂O, ist eine relativ preisgünstige Substanz. Vorteilhaft ist dabei auch, daß man auf ein Trägermaterial verzichten kann und das kristallwasserhaltige FeSO₄ z.B. als technisch reinen Stoff als frischen Entstickungskatalysator verwenden kann. Die gewünschte Kornfeinheit kann durch Mahlen erreicht werden. Für die Wirksamkeit als Hilfe bei der Abscheidung von Stäuben auch noch in den zuletzt durchströmten Feldern eines Elektrofilters sind die besonders feinkörnigen Anteile des Katalysators maßgebend.

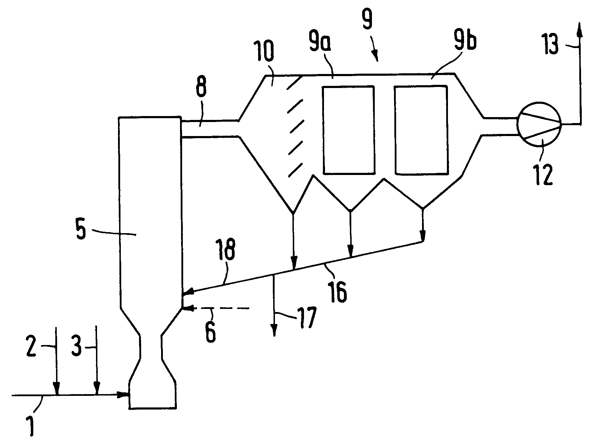

Ausgestaltungsmöglichkeiten des Verfahrens werden mit Hilfe der Zeichnung erläutert.

Das zu entstaubende und zu entstickende Abgas, das z.B. aus der Verbrennungsanlage eines Kraftwerks kommt, wird in der Leitung (1) herangeführt. Diesem Abgas, das Stickoxide enthält, gibt man durch die Leitung (2) NH₃ und durch die Leitung (3) frischen Entstickungskatalysator zu. Die NH₃-Dosierung wird so gewählt, daß pro Mol NOₓ im Abgas der Leitung (1) etwa 0,8 bis 1,2 Mol NH₃ zugesetzt werden. Der in der Leitung (3) zugegebene frische Entstickungskatalysator besteht zu mindestens 90 Gew.% aus kristallwasserhaltigem FeSO₄ mit Korngrößen im Bereich von 1 bis 150 µ, wobei das kristallwasserhaltige FeSO₄ des Entstickungskatalysators so fein aufgemahlen ist, daß mindestens 60 Gew.% Korngrößen im Bereich von 1 bis 60 µ und mindestens 10 Gew.% Korngrößen von höchstens 40 µ aufweisen.

Im Wirbelschichtreaktor (5) herrschen Temperaturen von etwa 250 bis 600°C und vorzugsweise 300 bis 500°C. Die Gasgeschwindigkeiten im Reaktor (5) liegen üblicherweise im Bereich von 2 bis 12 m/s und vorzugsweise von 4 bis 10 m/s, wie sie in der zirkulierenden Wirbelschicht vorliegen.

Es ist möglich, das Verfahren auch so auszugestalten, daß man im Reaktor (5) nicht nur Stickstoffoxide zu molekularem Stickstoff reduziert, sondern auch noch SO₂ und SO₃ chemisch bindet. Zum Zweck der Entschwefelung gibt man dem Reaktor (5) durch die gestrichelt eingezeichnete Leitung (6) Ca(OH)₂ oder CaO bevorzugt im festen Zustand zu. Andere Entschwefelungsmittel wie z.B. MgO kommen ebenfalls in Frage.

Zum Entstauben gelangt das feststoffhaltige Abgas durch den Kanal (8) in ein Elektrofilter (9), dem ein mechanischer Grobabscheider (10) vorgeschaltet ist. Das Elektrofilter weist mehrere Felder (9a) und (9b) auf, die die Feststoffe elektrostatisch abscheiden. Im vorliegenden Verfahren ist es wichtig, daß ein Restteil von staubfeinem FeSO₄ noch bis zum letzten Feld (9b) mit dem Abgas durchdringt, da dieses FeSO₄ die gleichzeitige Abscheidung anderer Stäube verbessert. Auf diese Weise ist es möglich, in dem durch das Gebläse (12) und zum Kamin (13) geförderten Abgas restliche Feststoffgehalte im Bereich kleiner 30 mg/Nm³ zu erreichen. Die Feststoffe, die durch das letzte Feld (9b) abgeschieden werden und in den Staubbunker (15) fallen, weisen üblicherweise einen Eisensulfatgehalt von mindestens 20 Gew.% und vorzugsweise von mindestens 30 Gew.% auf. Die in verschiedenen Bereichen des Elektrofilters (9) und im Grobabscheider (10) abgetrennten Feststoffe gelangen in die Sammelleitung (16), sie werden zum Teil durch die Leitung (17) aus dem Verfahren entfernt und der Rest wird in der Leitung (18) wieder dem Reaktor (5) aufgegeben.

### Beispiele

In einer der Zeichnung entsprechenden Anordnung im Pilotmaßstab werden dem Wirbelschichtreaktor (5) pro Stunde 1200 Nm³ Rauchgas aus einer Steinkohlefeuerung zugeführt. In der Leitung (1) weist das Rauchgas eine Temperatur von 450°C auf. Das Rauchgas enthält an Schadstoffen:

| | |
|---|---|
| Flugasche | 6 g/Nm³ |
| NOₓ | 470 mg/Nm³ |
| SO₂ | 1800 mg/Nm³ |

Bei den nachfolgend beschriebenen Versuchen werden dem Rauchgas pro Stunde jeweils 0,31 kg NH₃ durch die Leitung (2) zugemischt.

Beim 1. Versuch arbeitet man mit handelsüblichem Eisensulfat, das man durch die Leitung (3) dem Rauchgas in einer Menge von 8 g/Nm³ zugibt. Beim 2. Versuch (erfindungsgemäße Verfahrensweise) wird gemahlenes und bei Temperaturen von 300°C getrocknetes, kristallwasserhaltiges Eisensulfat in einer Menge von 2 g/Nm³ verwendet. Die nachfolgende Tabelle gibt die Körnungsverteilung des Katalysators an:

| Körnungsbereich | 1. Versuch | 2. Versuch |
|---|---|---|
| 0 bis 40 µm | 25,1 Gew.% | 82,2 Gew.% |
| 40 bis 60 µm | 8,7 Gew.% | 13,3 Gew.% |
| 60 bis 150 µm | 3,9 Gew.% | 3,6 Gew.% |
| größer 150 µm | 62,3 Gew.% | 0,9 Gew.% |

Die beiden Versuche bringen folgende Ergebnisse:

| | 1. Versuch | 2. Versuch |
|---|---|---|
| im Reingas der Leitung (13): | | |
| NOₓ | 80 mg/Nm³ | 80 mg/Nm³ |
| SO₂ | 200 mg/Nm³ | 160 mg/Nm³ |
| Flugasche | 100 mg/Nm³ | 20 mg/Nm³ |
| FeSO₄-Gehalt im Staub, der im letzten Feld (9b) des Elektrofilters abgeschieden wird | 10 Gew.% | 40 Gew.% |

Wenn man den 1. Versuch mit nur 2 g/Nm³ des handelsüblichen Eisensulfats durchführt, weist das Reingas der Leitung (13) folgende Gehalte an Schadstoffen auf:

| | |
|---|---|
| NOₓ | 120 mg/Nm³ |
| SO₂ | 400 mg/Nm³ |
| Flugasche | 180 mg/Nm³ |

## Patentansprüche

1. Verfahren zum Entstauben und Entsticken eines Verbrennungsabgases, wobei man das Abgas mit NH₃ mischt, mit Temperaturen im Bereich von etwa 250 bis 600°C als Wirbelgas durch eine Wirbelschicht leitet, die einen FeSO₄ enthaltenden Entstickungskatalysator aufweist, und Feststoffe in einem Elektrofilter abscheidet, dadurch gekennzeichnet, daß man der Wirbelschicht frischen Entstickungskatalysator zuführt, der zu mindestens 90 Gew.% aus kristallwasserhaltigem FeSO₄ mit Korngrößen im Bereich von 1 bis 150 µ besteht, wobei mindestens 60 Gew.% des frischen Entstickungskatalysators Korngrößen im Bereich von 1 bis 60 µ und mindestens 10 Gew.% Korngrößen von höchstens 40 µ aufweisen.

2. Verfahren nach Anspruch 1, dadurch gekennzeichnet, daß das Elektrofilter mehrere, vom Abgas nacheinander durchströmte Felder aufweist und in dem zuletzt durchströmten Feld ein Feststoffgemisch abgeschieden wird, das zu mindestens 20 Gew.% aus Eisensulfat besteht.

## Claims

1. A method for the removal of dust from and denitration of a combustion exhaust gas, wherein the exhaust gas is mixed with NH₃, is passed at temperatures in the range of about 250 to 600°C as fluidising gas through a fluidised bed which has a denitration catalyst containing FeSO₄, and solids are separated off in an electrostatic precipitator, characterised in that fresh denitration catalyst is fed to the fluidised bed, which catalyst consists of at least 90% by weight of FeSO₄ containing water of crystallisation with grain sizes in the range from 1 to 150 µ, at least 60% by weight of the fresh denitration catalyst having grain sizes in the range of 1 to 60 µ and at least 10% by weight grain sizes of at most 40 µ.

2. A method according to Claim 1, characterised in that the electrostatic precipitator has a plurality of fields through which exhaust gas flows in succession, and a solids mixture which consists of at least 20% by weight iron sulphate is separated off in the field through which the gas flows last.

## Revendications

1. Procédé de dépoussiérage et de dénitrification d'un effluent gazeux de combustion, qui consiste à melanger l'effluent gazeux à du NH₃, à l'envoyer à des températures de l'ordre de 250 à 600 °C environ en tant que gaz de fluidisation dans un lit fluidisé qui comporte un catalyseur de dénitrification contenant du FeSO₄ et à séparer la matière solide dans un électrofiltre, caractérisé en ce qu'il consiste à envoyer au lit fluidisé du catalyseur frais de dénitrification, qui est constitué pour au moins 90% en poids de FeSO₄ contenant de l'eau de cristallisation et d'une granulométrie comprise entre 1 et 150µ, au moins 60% en poids du catalyseur frais de dénitrification ayant des granulométries comprises entre 1 et 60µ et au moins 10% en poids des granulométries d'au plus 40µ.

2. Procédé suivant la revendication 1, caractérisé en ce que l'électrofiltre comporte plusieurs champs parcourus l'un après l'autre par l'effluent gazeux et il est séparé dans le champ parcouru en dernier un mélange de matières solides constitué pour au moins 20% en poids de sulfate de fer.
